# EUROPÄISCHE PATENTANMELDUNG

(11) **EP 3 967 916 A1**
(43) Veröffentlichungstag der Anmeldung: **16.03.2022**
(21) Anmeldenummer: 20216415.8
(22) Anmeldetag: 22.12.2020
(51) Int. Cl.: F16L 55/00, F16L 35/00

(54) **KODIERELEMENT FÜR EINE ANSCHLUSSEINRICHTUNG EINER FLUIDLEITUNG**

(30) Priorität: 14.09.2020 DE 202020105269 U
(71) Anmelder: Baumgartner Pneumatik GmbH, 63579 Freigericht (DE)
(72) Erfinder: BAUMGARTNER, Bodo, 63579 Freigericht (DE); CARLSDOTTER, Henrik-Nils, 63579 Freigericht (DE)
(74) Vertreter: Stoffregen, Hans-Herbert

(57) **Zusammenfassung**

Die Erfindung bezieht sich auf ein Kodierelement (10) für eine Anschlusseinrichtung (12) einer Fluidleitung (14) zum Signalisieren des in der Fluidleitung (14) transportierten Mediums, wobei das Kodierelement (10) einen ersten Abschnitt (26) aufweist, der eine Öffnung (28) für die Fluidleitung (14) umfasst und einen zweiten Abschnitt (30), der sich im Wesentlichen rechtwinklig zu dem ersten Abschnitt (26) und in axialer Richtung der Anschlusseinrichtung (12) erstreckt, wobei das Kodierelement (10) beim Aufschieben auf die Anschlussvorrichtung (12) federelastisch verformbar ist und eine Klemmkraft für das Festlegen des Kodierelementes (10) an der Anschlusseinrichtung durch eine klemmende Anlage des zweiten Abschnitts (26) an der Anschlusseinrichtung (12) aufbringt. Um die Montage zu erleichtern, insbesondere eine Montage oder einen Austausch bei angeschlossener Fluidleitung zu ermöglichen, ist vorgesehen, dass der erste und zweite Abschnitt ein Kreisringsegment mit einem Schlitz (32) bilden, wobei der Schlitz (32) den ersten und zweiten Abschnitt in axialer Richtung vollständig unterbricht und sich in die Öffnung (28) erstreckt.

## Beschreibung

Die Erfindung betrifft ein Kodierelement für eine Anschlusseinrichtung einer Fluidleitung zum Signalisieren des in der Fluidleitung transportierten Mediums, wobei das Kodierelement einen ersten Abschnitt aufweist, der eine Öffnung für die Fluidleitung umfasst und einen zweiten Abschnitt, der sich im Wesentlichen rechtwinklig zu dem ersten Abschnitt und in axialer Richtung der Anschlusseinrichtung erstreckt, wobei das Kodierelement beim Aufschieben auf die Anschlussvorrichtung federelastisch verformbar ist und eine Klemmkraft für das Festlegen des Kodierelementes an der Anschlusseinrichtung durch eine klemmende Anlage des zweiten Abschnitts an der Anschlusseinrichtung aufbringt,

Ein entsprechendes Kodierelement ist aus der EP 2 143 985 A1 bekannt. Das bekannte Kodierelement umfasst einstückig einen scheibenförmigen Abschnitt mit einer Öffnung für den Durchtritt der anzuschließenden Fluidleitung und mindestens zwei separate und sich im Wesentlichen rechtwinklig zum scheibenförmigen Abschnitt erstreckende kragenförmige Abschnitte zum Aufschieben des Kodierelementes auf die Anschlusseinrichtung. Die Öffnung des scheibenförmigen Abschnitts ist als kreisrunde Durchbrechung ausgebildet, so dass das Kodierelement vor dem Anschluss der Fluidleitung auf die Anschlusseinrichtung geschoben werden muss. Ein Austausch des Kodierelementes nach Anschluss der Fluidleitung ist ohne Demontage der Fluidleitung auf einfache Weise nicht möglich.

Davon ausgehend liegt der vorliegenden Erfindung die Aufgabe zugrunde, ein Kodierelement der eingangs genannten Art derart weiterzubilden, dass die Montage erleichtert wird, insbesondere eine Montage oder einen Austausch bei angeschlossener Fluidleitung ermöglicht wird.

Die Aufgabe wird erfindungsgemäß dadurch gelöst, dass der erste und zweite Abschnitt ein Kreisringsegment mit einem Schlitz bilden, wobei der Schlitz den ersten und zweiten Abschnitt in axialer Richtung vollständig unterbricht und sich in die Öffnung erstreckt.

Gegenüber dem Stand der Technik wird der Vorteil erreicht, dass das Kodierelement auch bei montierter Fluidleitung in radialer Richtung aufgeschoben oder ausgetauscht werden kann.

Gemäß einer besonders bevorzugten Ausführungsform ist vorgesehen, dass die Klemmkraft überwiegend durch den einzigen zweiten Abschnitt bereitstellbar ist.

Eine besonders einfache Herstellung ergibt sich, wenn das aus erstem und zweitem Abschnitt gebildete Kreisringsegment einstückig ausgebildet ist.

Vorzugsweise erstreckt sich das Kreisringsegment über einen Winkel im Bereich zwischen 180 ° und 360 °, insbesondere zwischen 185 ° und 300 °.

Zur Verbesserung der Klemmwirkung ist vorgesehen, dass der zweite Abschnitt auf seiner nach innen gerichteten Fläche ein Klemmelement wie umlaufenden Vorsprung oder umlaufende Rille für eine klemmende Anlage an der Anschlusseinrichtung aufweist.

Der in dem Kreisringsegment ausgebildete Schlitz weist vorzugsweise eine Weite W auf, die größer ist als ein Durchmesser der Fluidleitung. Dadurch wird ein einfaches Aufschieben ermöglicht, ohne dass das Kodierelement übermäßig verformt werden muss.

Der Schlitz wird durch Ränder des ersten und zweiten Abschnitts gebildet, wobei die Ränder parallel zueinander verlaufen.

Das Kodierelement ist vorzugsweise aus Aluminium hergestellt und durch elektrolytische Oxidation farbig codiert. Allerdings kann das Kodierelement auch aus anderen federelastisch verformbaren Materialien wie Kunststoffen hergestellt sein.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung eines bevorzugten Ausführungsbeispiels.

Es zeigen:
- Fig. 1: eine perspektivische Ansicht einer Anschlusseinrichtung mit Kodierelement,
- Fig. 2: eine Seitenansicht der Anschlusseinrichtung mit Kodierelement, teilweise geschnitten und
- Fig. 3: eine Draufsicht der Anschlusseinrichtung mit Kodierelement.

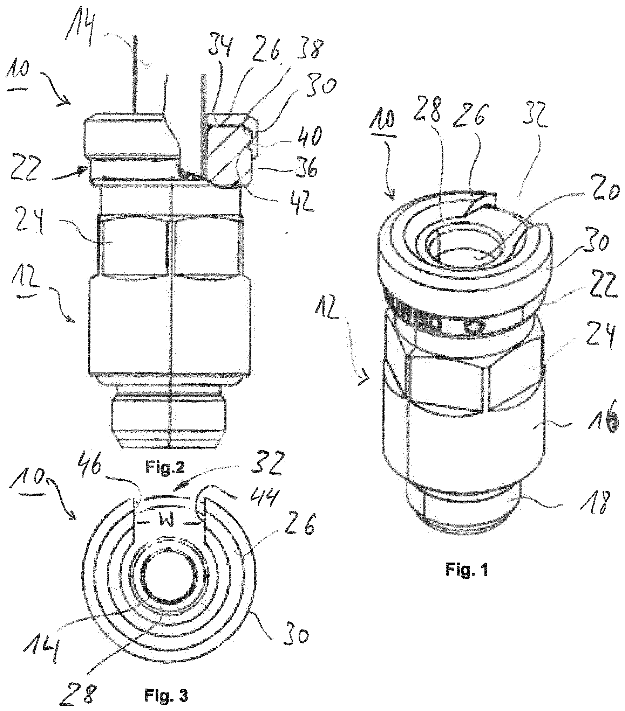

Die Fig. 1 bis 3 zeigen in verschiedenen Ansichten ein Kodierelement 10 für eine an sich bekannte Anschlusseinrichtung 12 einer Fluidleitung 14 zur Kennzeichnung eines in der Fluidleitung 14 transportierten Mediums.

Die Anschlusseinrichtung 12 umfasst einen Grundkörper 16 mit einem ersten Ende, an dem ein Außengewinde 18 ausgebildet ist, mittels dem die Anschlusseinrichtung 10 fluiddicht, beispielsweise mit einem Steuerungsgehäuse einer Pneumatik, verbindbar ist.

An einem dem ersten Ende gegenüberliegenden zweiten Ende ist eine Anschlussöffnung 20 vorgesehen, in die die Fluidleitung 14 eingesteckt und durch Verschieben einer gegenüber dem Grundkörper 16 der Anschlusseinrichtung 12 verschiebbar geführten Betätigungshülse 22 an der Anschlusseinrichtung 10 klemmend und dicht festgelegt werden kann.

Zwischen dem Außengewinde 18 und der Betätigungshülse 22 weist der Grundkörper 16 einen Werkzeugansatz 24 auf, der in eine Außenwandung des Grundkörpers eingearbeitet ist.

Das Kodierelement 10 weist einen ersten Abschnitt 26 auf, in dem eine Öffnung 28 für die Fluidleitung 14 ausgebildet ist und einen zweiten Abschnitt 30, der sich im Wesentlichen rechtwinklig zu dem ersten Abschnitt 26 und in axialer Richtung der Anschlusseinrichtung 12 erstreckt.

Das Kodierelement 10 ist aus einem federelastischen Material ausgebildet, welches beim Aufschieben auf die Anschlusseinrichtung verformbar ist. Eine Klemmkraft für das Festlegen des Kodierelementes 10 an der Anschlusseinrichtung wird durch eine klemmende Anlage des zweiten Abschnitts an der Anschlusseinrichtung 12 aufgebracht.

Gemäß der Erfindung bilden der erste Abschnitt 26 und der zweite Abschnitt 30 ein Kreisringsegment mit einem Schlitz 32, der sowohl den ersten Abschnitt 26 als auch den zweiten Abschnitt 30 in axialer Richtung vollständig unterbricht und in die Öffnung 28 übergeht. Somit kann das Kodierelement 10 in radialer Richtung auf die Anschlusseinrichtung 12 aufgeschoben und abgenommen werden, selbst wenn die Fluidleitung 14 in der Anschlusseinrichtung 12 montiert ist.

Der Schlitz 32 weist eine Weite W auf, die vorzugsweise größer als ein Durchmesser der Fluidleitung 14 ist. Dies ist jedoch nicht zwingend, da das Kodierelement 10 federelastisch verformbar ausgebildet ist.

Fig. 2 zeigt eine Seitenansicht der Anschlusseinrichtung 12 mit dem Kodierelement 10, wobei das Kodierelement 10 und die Betätigungshülse 22 teilweise in Schnittdarstellung gezeigt sind.

Der erste Abschnitt 26 des Kodierelementes 10 ist als durchgängiges Kreissegment ausgebildet und liegt in montiertem Zustand auf einer Oberfläche 34 der Betätigungshülse 22 auf. Der zweite Abschnitt 26 ist als durchgängiger umlaufender Rand ausgebildet und liegt an einer Seitenfläche 36 der Bestätigungshülse 22 an. Der erste Abschnitt 26 ist einstückig mit dem zweiten Anschnitt 30 verbunden.

An einer Innenseite 38 des zweiten Abschnitts 26 verläuft ein Klemmmittel 40 in Form eines Vorsprungs, der in eine Nut 42 eingreift, die in der Seitenfläche 36 der Betätigungshülse 22 angeordnet ist.

Fig. 3 zeigt eine Draufsicht des Kodierelementes 10. Der erste Abschnitt 26 ist als ein einziges Kreisringsegment ausgebildet, das die Öffnung 28 und den Schlitz 32 begrenzt. Der zweite Abschnitt 30 ist als ein einziger umlaufender Rand ausgebildet, der im Wesentlichen die Klemmkraft bereitstellt. Der Schlitz 30 weist eine Weite W auf, die vorzugsweise größer ist als ein Durchmesser der Fluidleitung 14, damit das Kodierelement in radialer Richtung auf die Anschlusseinrichtung 12 mit eingesteckter Fluidleitung 14 aufschiebbar ist.

Der erste und zweite Abschnitt 26, 30 bilden zum Schlitz 32 hin Ränder 44, 46, die parallel zueinander verlaufen und in die Öffnung 28 übergehen. Vorzugsweise erstreckt sich das Kreisringsegment über einen Winkel zwischen 180 ° und 360 °, insbesondere 150 ° bis 300 °.

Das Kodierelement 10 ist aus einem federelastischen Material, insbesondere Aluminium, hergestellt und ist durch elektrolytische Oxidation farbig kodiert.

## Patentansprüche

1. Kodierelement (10) für eine Anschlusseinrichtung (12) einer Fluidleitung (14) zum Signalisieren des in der Fluidleitung (14) transportierten Mediums, wobei das Kodierelement (10) einen ersten Abschnitt (26) aufweist, der eine Öffnung (28) für die Fluidleitung (14) umfasst und einen zweiten Abschnitt (30), der sich im Wesentlichen rechtwinklig zu dem ersten Abschnitt (26) und in axialer Richtung der Anschlusseinrichtung (12) erstreckt, wobei das Kodierelement (10) beim Aufschieben auf die Anschlussvorrichtung (12) federelastisch verformbar ist und eine Klemmkraft für das Festlegen des Kodierelementes (10) an der Anschlusseinrichtung durch eine klemmende Anlage des zweiten Abschnitts (26) an der Anschlusseinrichtung (12) aufbringt,
**dadurch gekennzeichnet,**
**dass** der erste und zweite Abschnitt ein Kreisringsegment mit einem Schlitz (32) bilden, wobei der Schlitz (32) den ersten und zweiten Abschnitt in axialer Richtung vollständig unterbricht und sich in die Öffnung (28) erstreckt.

2. Kodierelement nach Anspruch 1,
**dadurch gekennzeichnet,**
**dass** das aus erstem und zweitem Abschnitt (26, 30) gebildete Kreisringsegment einstückig ausgebildet ist.

3. Kodierelement nach Anspruch 1 oder 2,
**dadurch gekennzeichnet,**
**dass** die Klemmkraft überwiegend durch den einzigen zweiten Abschnitt bereitstellbar ist.

4. Kodierelement nach zumindest einem der vorhergehenden Ansprüche,
**dadurch gekennzeichnet,**
**dass** sich das Kreisringsegment sich über einen Winkel im Bereich zwischen 180 ° und 360 ° erstreckt, insbesondere zwischen 185 ° und 300 °.

5. Kodierelement nach zumindest einem der vorhergehenden Ansprüche,
**dadurch gekennzeichnet,**
**dass** der zweite Abschnitt (30) auf seiner nach innen gerichteten Fläche (38) ein Klemmelement (40) wie umlaufenden Vorsprung oder umlaufende Rille für eine klemmende Anlage an der Anschlusseinrichtung (12) aufweist.

6. Kodierelement nach zumindest einem der vorhergehenden Ansprüche,
**dadurch gekennzeichnet,**
**dass** der Schlitz (32) eine Weite W aufweist, die größer ist als ein Durchmesser der Fluidleitung (14).

7. Kodierelement nach zumindest einem der vorhergehenden Ansprüche,
**dadurch gekennzeichnet,**
**dass** der Schlitz (32) durch Ränder (44, 46) des ersten und zweiten Abschnitts (26, 30) gebildet ist, wobei die Ränder (44, 46) parallel zueinander verlaufen.

8. Kodierelement nach zumindest einem der vorhergehenden Ansprüche,
**dadurch gekennzeichnet,**
**dass** das Kodierelement (10) aus Aluminium hergestellt ist und durch elektrolytische Oxidation farbig codiert ist.
